# EUROPEAN PATENT SPECIFICATION

(11) **EP 4 050 211 B1**
(45) Date of publication and mention of the grant of the patent: **28.01.2026**
(21) Application number: 21158914.8
(22) Date of filing: 24.02.2021
(51) Int. Cl.: F03D 13/10, F03D 13/25

(54) **METHOD OF OFFSHORE MOUNTING A WIND TURBINE HAVING A SERVICE PLATFORM**
VERFAHREN ZUR OFFSHORE-MONTAGE EINER WINDTURBINE MIT EINER SERVICEPLATTFORM
PROCÉDÉ DE MONTAGE EN MER D'UNE ÉOLIENNE DOTÉE D'UNE PLATEFORME DE SERVICE

(43) Date of publication of application: 31.08.2022
(73) Proprietor: Siemens Gamesa Renewable Energy A/S, 7330 Brande (DK)
(72) Inventor: Soerensen, Johnny, 6920 Videbaek (DK)
(74) Representative: SGRE-Association

(56) References cited:
- EP-A1- 2 586 933
- EP-A1- 3 689 806
- EP-B1- 2 586 933
- WO-A1-01/23253
- WO-A1-2017/126649
- US-B1- 10 612 523

## Description

### Field of invention

The present invention relates to a method of offshore mounting a wind turbine, and to a wind turbine.

A conventional wind turbine comprises a foundation, a tower, a nacelle and a plurality of blades. A transition piece is arranged as a kind of adapter between the foundation and the tower. A service platform is arranged at an upper portion of the transition piece. In the conventional wind turbine, the foundation, the transition piece and the tower are nested into each other. The conventional wind turbine is mounted by steps of mounting the foundation on or above a sea ground; mounting the transition piece on top of the foundation, and mounting the tower on top of the transition piece. Eventually, the nacelle is mounted to the tower, and the plurality of blades is mounted to the nacelle. In another conventional wind turbine, the wind turbine comprises a jacket foundation, to which a service platform is integrally mounted before mounting the tower thereto.

In both of these prior art wind turbines, the service platform is mounted to the foundation. This needs additional structures and/or cost extensive offshore installation time.

Further prior art examples are disclosed in EP 3 689 806 A1 and US 10 612 523 B1.

### Summary of the Invention

It is the object of the invention to provide a simplified and less costly method of offshore mounting a wind turbine having a service platform. This object is achieved by the subject matters of the independent claims. The present invention is further developed as set forth in the dependent claims.

According to a first aspect of the invention, a method of offshore mounting a wind turbine is provided. The wind turbine comprises a foundation, a tower, a nacelle and a plurality of blades. The method comprising steps of: a) mounting the foundation on or above a sea ground; b) mounting the tower directly to the foundation, wherein the tower comprises a docking device for docking a service platform, which is configured to be accessed by maintenance personnel; c) mounting the nacelle to the tower; and d) mounting the plurality of blades to the nacelle. In the context of the present invention, the term "docking device" can comprise a bolted connection, a welded connection, a latching mechanism or any other suitable means which is configured to dock the service platform to the tower. In case of a welded connection, the service platform is integrally formed to the tower.

Contrary to the conventional wind turbines, the service platform is mounted on the tower so that offshore installation time as well as costs of the structure are reduced. Furthermore, the service platform can be (onshore) pre-installed at the tower. Compared thereto, a prior art service platform cannot be pre-installed at the foundation, because a piling or hammering action for installing the foundation in the sea ground would cause excessive forces and loads on the service platform so that the same could be damaged. With the present invention, the service platform can readily be pre-installed on the tower in a save and cost-efficient manner.

Further advantageously, the service platform can be provided with a footprint (when loaded on the vessel) which is similar to an existing footprint of sea fasteners of the tower. Thereby, a vessel deck space on a jack-up vessel or floating crane installation vessel can be saved.

The service platform supports easy offshore access to the wind turbine and saves costs compared to traditional solutions. The platform can easily be replaced together with the nacelle by a crane, for example if a complex maintenance work is required.

In an embodiment, the foundation is mounted as an integral part, in particular as a monopile. In an embodiment, the tower is mounted as an integral part. The installation is simplified if only two separate parts are mounted to each other.

In an embodiment, the wind turbine does not comprise any separate unit, in particular no transition piece, between the foundation and the tower. If the foundation and the tower are directly connected without any additional transition piece, the costs of the wind turbine having the service platform are further reduced both in terms of the manufacture and installation parameters. The foundation design of offshore wind turbines can be optimized. The arrangement of the service platform at the tower further enables an optimized adaption to future offshore wind turbines and foundations without transition piece.

In an embodiment, the tower is directly mounted to the foundation by at least one of a flange connection, preferably by means of bolts having different orientations with respect to a tower axis, a slip-joint connection, and a wedge connection. In the slip-joint connection, the tower has a first tube which is mounted to the foundation having a second tube, wherein one of first and second tubes has a diameter which is larger than a diameter of the other one of the first and second tubes, wherein the one of the first and second tubes having the larger diameter is put over and guided by the other one of the first and second tubes, and a wedge connection. Fastening the tower to the foundation is made secure and fast. Particularly the slip-joint connection allows larger tolerances so that an installation at high wind speeds or the use of floating vessel, which can be slightly moved due to waves, wind, etc., can be facilitated. The slip-joint connection enables an easier and much faster installation process compared to a bolted flange-to-flange connection. By use of the slip-joint connection, no service personal is required at the site of mounting the nacelle to the tower. Thus, the slip-joint connection enables a safer approach.

In an embodiment, the service platform is already docked, preferably on-shore, to the docking device when the tower is directly mounted to the foundation. In addition, various equipment on the service platform can be pre-installed or installed offshore, preferable pre-installed on-shore for permanent components. Temporary equipment can also be pre-installed on-shore or on quayside. The equipment can be de-commissioned offshore after use such as diesel generator and tools and equipment for installation. All pre-installed equipment can be tested on-shore to enable maximum relatability under offshore installation and termination of electrical infrastructure. Offshore installation time is reduced compared to the prior art. In an embodiment, the service platform is permanently docked, preferable on-shore, to the tower.

According to the invention, the service platform is foldable docked to the tower. In an embodiment, the service platform is unfolded by activators which are remotely operated. Thereby, vessel space can be saved so that a vessel can carry a high number of towers at the same time.

According to a second aspect of the invention, a wind turbine comprises a foundation, a tower, a nacelle and a plurality of blades, wherein the tower comprises a docking device for docking a service platform which is configured to be accessed by maintenance personnel.

In an embodiment, the foundation is an integral part, in particular a monopile, and/or the tower is an integral part. In an embodiment, the wind turbine does not comprise any separate unit, in particular no transition piece, between the foundation and the tower.

In an embodiment, the tower is directly mounted to the foundation by at least one of a flange connection, preferably by means of bolts having different orientations with respect to a tower axis, a slip-joint connection, and a wedge connection. In the slip-joint connection, the tower has a first tube which is mounted to the foundation having a second tube, wherein one of first and second tubes has a diameter which is larger than a diameter of the other one of the first and second tubes, wherein the one of the first and second tubes having the larger diameter is put over and guided by the other one of the first and second tubes

In an embodiment, the service platform is foldable docked to the docking device. In an embodiment, the service platform is unfoldable, i.e., configured to be unfolded, by activators.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a foundation of a wind turbine according to an embodiment;
- Fig. 3: shows a tower of a wind turbine still without service platform;
- Fig. 4: shows the tower of the wind turbine according to an embodiment with service platform;
- Fig. 5: shows the foundation and the tower according to an embodiment during mounting;
- Fig. 6: shows the foundation and the mounted tower according to the embodiment;
- Fig. 7: shows a service platform of a wind turbine according to an embodiment;
- Fig. 8: shows a folded service platform of a wind turbine according to an embodiment;
- Fig. 9: shows the unfolded service platform of the wind turbine according to the embodiment; and
- Fig. 10: shows an unfolded service platform of a wind turbine according to another embodiment;
- Fig. 11: shows a flange connection between the tower and the foundation according to an embodiment; and
- Fig. 12: shows a wedge connection between the tower and the foundation according to an embodiment.

### Detailed Description

The illustrations in the drawings are schematically. It is noted that in different figures, similar or identical elements are provided with the same reference signs.

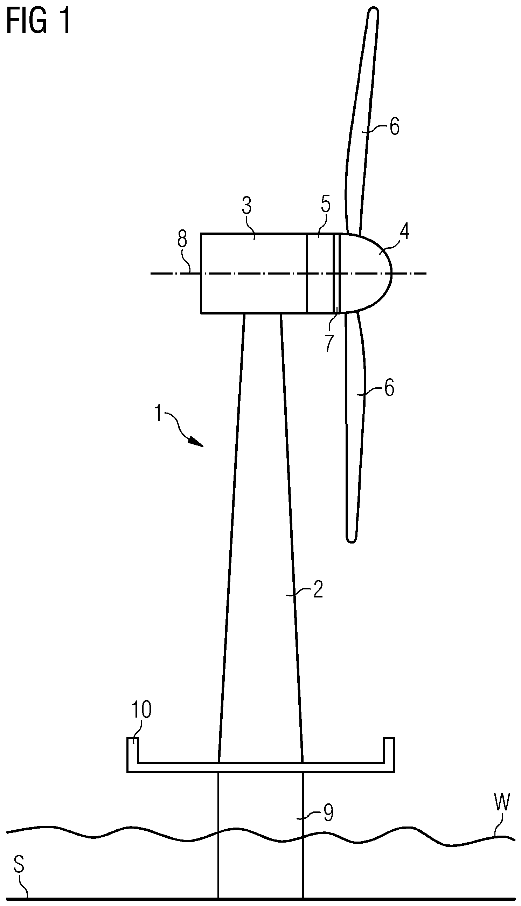

**Fig. 1** shows a wind turbine 1. The wind turbine 1 comprises a nacelle 3 and a tower 2. The tower 2 comprises a docking device for docking a service platform 10, which is configured to be accessed by maintenance personnel. The docking device can be formed by a bolted or welded connection or any other suitable means. The tower 2 is directly mounted to a foundation 9 which is installed before on a target position in a seabed S below a waterline W. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gear-less, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

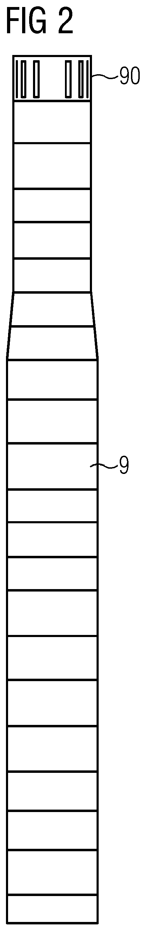

**Fig. 2** shows a foundation 9 of a wind turbine 1 according to an embodiment. The foundation 9 is formed as an integral part, in particular as a monopile. The foundation 9 is mounted on or above a sea ground S, and in the embodiment, the foundation 9 is installed on the target position in the sea ground S. The foundation 9 comprises at its upper part a flange connection 90. The flange connection 90 serves to directly connect the tower 2 to the foundation 9, for example by means of bolts.

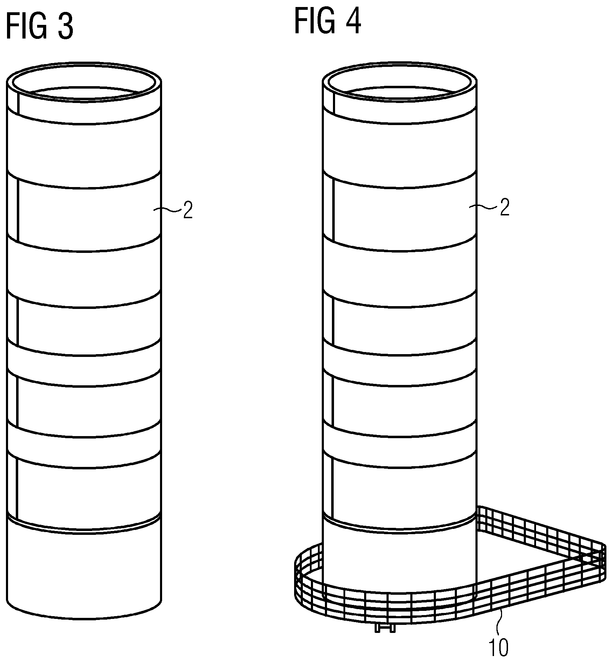

**Fig. 3** shows a tower 2 of a wind turbine 1 still without service platform 10, and **Fig. 4** shows the tower 2 of the wind turbine 1 according to an embodiment with service platform 10. The service platform 10 can be casted if it is made of concrete, or it can be bolted or welded if it is made of steel like in conventional offshore wind turbines. The service platform 10 is arranged at a bottom portion of the tower 2. The service platform 10 can offshore be mounted to the tower 2. The tower 2 is directly mounted to the foundation 9, wherein the tower 2 is preferably an integral part. In particular, the wind turbine 1 does not comprise any separate unit, in particular no prior art transition piece like, between the foundation 9 and the tower 2. In an embodiment, the service platform 10 is attached to the tower 2 remotely by a crane and secured with pins.

The tower 2 comprises the docking device for docking the service platform 10 which is configured to be accessed by maintenance personnel. In the embodiment of Fig. 4, the service platform 10 is already docked to the docking device when the tower 2 is directly mounted to the foundation 9. The docking device can be a (reversable) bolt connection. Alternatively, the docking device can, for example, be a welded connection so that the service platform 10 is permanently docked, preferable on-shore, to the tower 2.

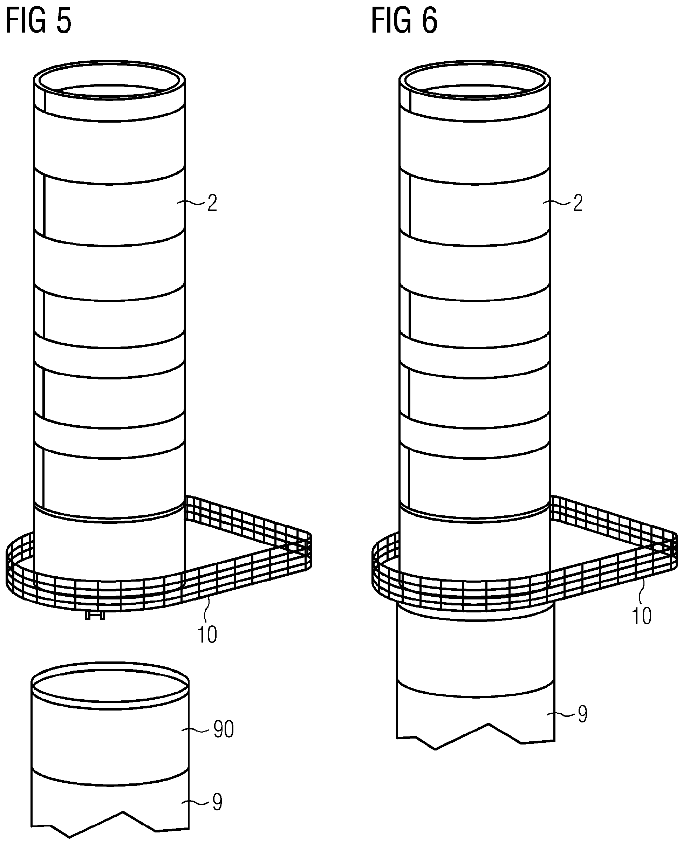

**Fig. 5** shows the foundation 9 and the tower 2 according to an embodiment during mounted. The tower 2 with the service platform 10 can be lifted from a vessel such as a ship on top of the foundation 9 which can be formed as the monopile or another foundation type.

**Fig. 6** shows the foundation 9 and the mounted tower 2 according to the embodiment. The tower 2 has been guided to ensure a target position for the bolted flange connection 90 between the foundation 9 and tower 2. When the tower 2 has reached the correct position, the tower 2 has been secured by mounting bolts in the flange connection 90. In a modification, a slip-joint connection can be used to mount to tower 2 to the foundation 9. In this case, the tower 2 has a first tube which is mounted to the foundation 9 having a second tube, wherein one of first and second tubes has a diameter which is larger than a diameter of the other one of the first and second tubes, wherein the one of the first and second tubes having the larger diameter is put over and guided by the other one of the first and second tubes. Alternatively, any other connecting concept can also be used.

Eventually, the nacelle 3 is mounted to the tower 2, and the plurality of blades 6 is mounted to the nacelle 3.

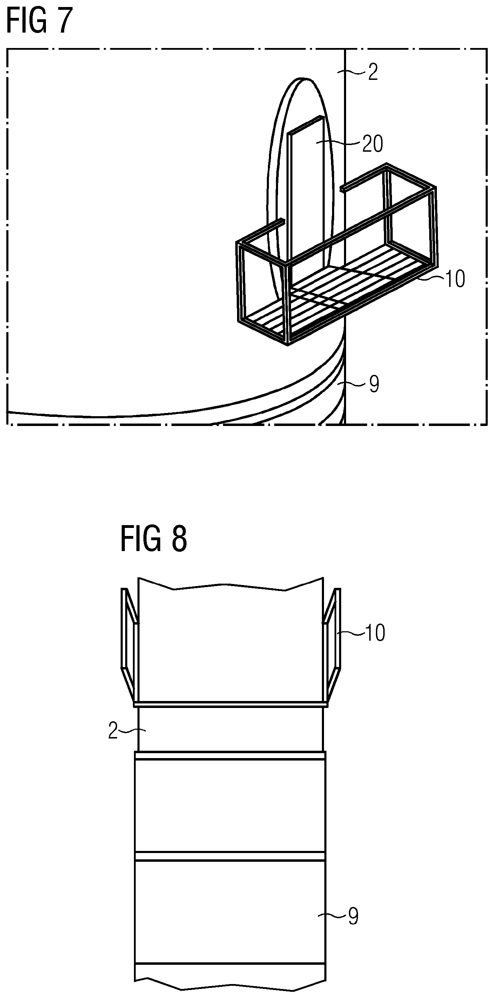

**Fig. 7** shows a service platform 10 of a wind turbine 1 according to an embodiment. This service platform 10 is a compact platform. The service platform 10 can be arranged only at a predetermined part of the circumference of the tower 2, for example at that part where a door 20 is arranged. The service platform 10 is a relatively small platform only at a door frame of the door 20 so that a vessel space in a vessel for transporting the tower 2 can be saved.

**Fig. 8** shows a folded service platform 10 of a wind turbine 1 according to an embodiment. The service platform 10 is foldable docked to the tower 2. The service platform 10 is folded, for example during transport to save vessel space.

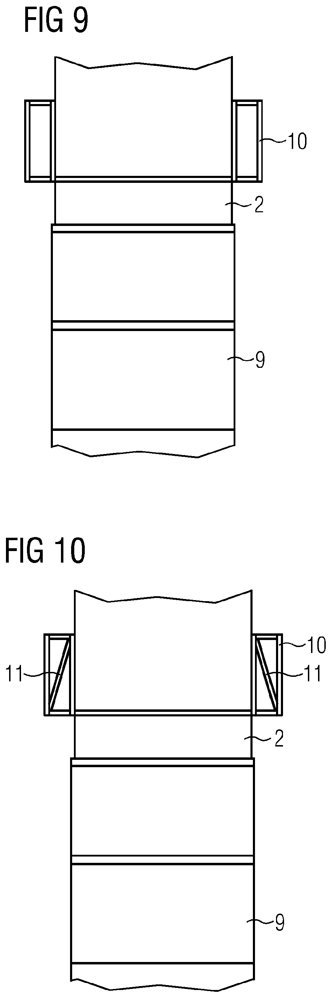

**Fig. 9** shows the unfolded service platform 10 of the wind turbine 1 according to the embodiment.

**Fig. 10** shows an unfolded service platform 10 of a wind turbine 1 according to another embodiment. The service platform 10 is remotely unfolded from an installation vessel on-shore or offshore by activators 11. The activators 11 can be hydraulic or pneumatic actuators.

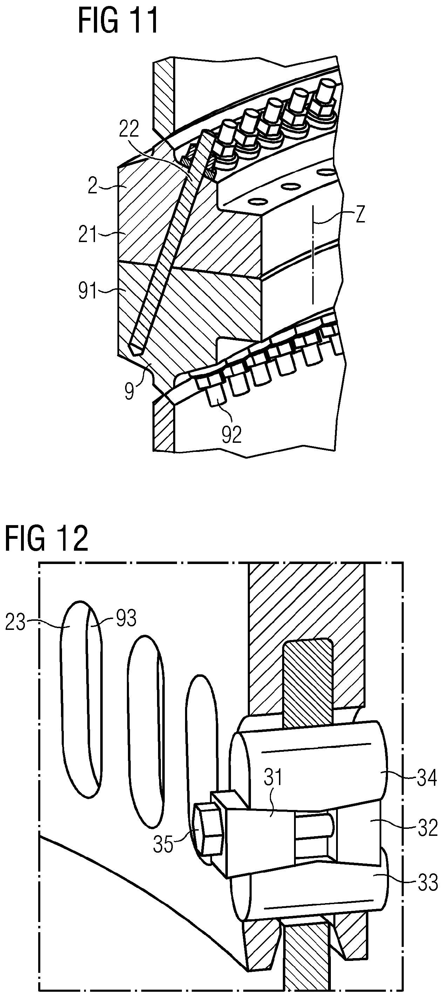

**Fig. 11** shows a flange connection between the tower 2 and the foundation 9 according to an embodiment. The tower 2 has a tower flange 21, and the foundation 9 has a foundation flange 91, wherein both flanges 21, 91 are mounted to each other by first bolts 22 and second bolts 92. In detail, a number of the first bolts 22 is inserted into the tower flange 21 in a first orientation or inclination angle relative to a tower axis z, and a number of the second bolts 92 is inserted into the foundation flange 91 in a second orientation or inclination angle relative to the tower axis z, wherein the first and second orientations are different from each other. As shown in Fig. 11, such configuration can be designated as an X-bolt flange connection.

Fig. 12 shows a wedge connection between the tower 2 and the foundation 9 according to an embodiment. The wedge connection comprises a first wedge member 31, a second wedge member 32, both being movably received in a first wedge receiving member 33 and a second wedge receiving member 34. The members 31, 32, 33, 34 are in turn received in an elongated tower hole 23 and an elongated foundation hole 93, which are congruent to each other.

The first and second wedge members 31, 32 can be tightened against the first and second wedge receiving members 33, 34 by tightening a wedge bolt 35. By tightening the wedge bolt 35, the first and second wedge receiving members 33, 34 are in turn tightened against the elongated tower hole 23 and the elongated foundation hole 93.

By the present invention, the service platform 10 can be mounted on-shore on preassembly site so that cost intensive offshore installation time is reduced. Any desired service platform installations and equipment can be pre-installed prior to offshore installation. The design without transition piece requires less interfaces at the foundation 9. For example, a David crane can be linked to internal controls and tested in advance.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of offshore mounting a wind turbine (1), the wind turbine (1) comprising a foundation (9), a tower (2), a nacelle (3) and a plurality of blades (6), the method comprising the steps of:
a) mounting the foundation (9) on or above a sea ground (S) ;
b) mounting the tower (2) directly to the foundation (9), wherein the tower (2) comprises a docking device for docking a service platform (10) which is configured to be accessed by maintenance personnel, wherein the service platform (10) is foldable docked to the tower (2);
c) mounting the nacelle (3) to the tower (2); and
d) mounting the plurality of blades (6) to the nacelle (3).

2. The method according to the preceding claim, wherein
the foundation (9) is mounted as an integral part, in particular as a monopile.

3. The method according to any one of the preceding claims, wherein
the tower (2) is mounted as an integral part.

4. The method according to any one of the preceding claims, wherein
the wind turbine (1) does not comprise any separate unit, in particular no transition piece, between the foundation (9) and the tower (2).

5. The method according to any one of the preceding claims, wherein
the tower (2) is directly mounted to the foundation (9) by at least one of:
a flange connection (90), preferably by means of bolts having different orientations with respect to a tower axis;
a slip-joint connection, wherein the tower (2) has a first tube which is mounted to the foundation (9) having a second tube, wherein one of first and second tubes has a diameter which is larger than a diameter of the other one of the first and second tubes, wherein the one of the first and second tubes having the larger diameter is put over and guided by the other one of the first and second tubes; and
a wedge connection.

6. The method according to any one of the preceding claims, wherein
the service platform (10) is already docked, preferably onshore, to the docking device when the tower (2) is directly mounted to the foundation (9).

7. The method according to any one of the preceding claims, wherein
the service platform (10) is permanently docked to the tower (2).

8. The method according to any one of the preceding claims, wherein
the service platform (10) is unfolded by activators (11) which are remotely operated.

9. An offshore wind turbine (1) comprising a foundation (9), a tower (2), a nacelle (3) and a plurality of blades (6), wherein the tower (2) is directly mounted to the foundation (9) and comprises a docking device for docking a service platform (10) which is configured to be accessed by maintenance personnel, **characterized in that** the service platform (10) is foldable docked to the tower (2).

10. The wind turbine (1) according to the preceding claim, wherein
the foundation (9) is an integral part, in particular a monopile, and/or the tower (2) is an integral part.

11. The wind turbine (1) according to any one of claims 9 and 10, wherein
the wind turbine (1) does not comprise any separate unit, in particular no transition piece, between the foundation (9) and the tower (2).

12. The wind turbine (1) according to any one of claims 9 to 11, wherein
the tower (2) is directly mounted to the foundation (9) by at least one of:
a flange connection (90), preferably by means of bolts having different orientations with respect to a tower axis;
a slip-joint connection, wherein the tower (2) has a first tube which is mounted to the foundation (9) having a second tube, wherein one of first and second tubes has a diameter which is larger than a diameter of the other one of the first and second tubes, wherein the one of the first and second tubes having the larger diameter is put over and guided by the other one of the first and second tubes; and
a wedge connection.

13. The wind turbine (1) according to any one of claims 9 to 12, wherein
the service platform (10) is configured to be unfolded by activators (11).

## Patentansprüche

1. Verfahren zum Offshore-Montieren einer Windturbine (1), wobei die Windturbine (1) ein Fundament (9), einen Turm (2), eine Gondel (3) und eine Vielzahl von Blättern (6) umfasst, wobei das Verfahren die folgenden Schritte umfasst:
a) Montieren des Fundaments (9) auf oder über einem Meeresboden (S);
b) Montieren des Turms (2) direkt auf das Fundament (9), wobei der Turm (2) eine Andockvorrichtung zum Andocken einer Serviceplattform (10) umfasst, die dazu konfiguriert ist, von Wartungspersonal betreten zu werden, wobei die Serviceplattform (10) faltbar an den Turm (2) angedockt ist;
c) Montieren der Gondel (3) an den Turm (2); und
d) Montieren der Vielzahl von Blättern (6) an die Gondel (3).

2. Verfahren nach dem vorhergehenden Anspruch, wobei das Fundament (9) als integraler Teil, insbesondere als Monopile, montiert ist.

3. Verfahren nach einem der vorhergehenden Ansprüche, wobei der Turm (2) als integraler Teil montiert ist.

4. Verfahren nach einem der vorhergehenden Ansprüche, wobei die Windturbine (1) keine separate Einheit, insbesondere kein Übergangsstück, zwischen dem Fundament (9) und dem Turm (2) umfasst.

5. Verfahren nach einem der vorhergehenden Ansprüche, wobei der Turm (2) durch mindestens eines der Folgenden direkt auf das Fundament (9) montiert ist:
eine Flanschverbindung (90), vorzugsweise unter Verwendung von Bolzen, die unterschiedliche Ausrichtungen in Bezug auf eine Turmachse aufweisen;
eine Gleitgelenkverbindung, wobei der Turm (2) ein erstes Rohr aufweist, das an dem Fundament (9) montiert ist, das ein zweites Rohr aufweist, wobei eines von dem ersten und dem zweiten Rohr einen Durchmesser aufweist, der größer als ein Durchmesser des anderen von dem ersten und dem zweiten Rohr ist, wobei das eine von dem ersten und dem zweiten Rohr mit dem größeren Durchmesser über das andere von dem ersten und dem zweiten Rohr gelegt und geführt wird; und
eine Keilverbindung.

6. Verfahren nach einem der vorhergehenden Ansprüche, wobei die Serviceplattform (10) bereits an die Andockvorrichtung angedockt ist, vorzugsweise an Land, wenn der Turm (2) direkt auf das Fundament (9) montiert wird.

7. Verfahren nach einem der vorhergehenden Ansprüche, wobei die Serviceplattform (10) permanent an den Turm (2) angedockt ist.

8. Verfahren nach einem der vorhergehenden Ansprüche, wobei die Serviceplattform (10) durch Aktivatoren (11) entfaltet wird, die ferngesteuert sind.

9. Offshore-Windturbine (1), umfassend ein Fundament (9), einen Turm (2), eine Gondel (3) und eine Vielzahl von Blättern (6), wobei der Turm (2) direkt auf das Fundament (9) montiert ist und
eine Andockvorrichtung zum Andocken einer Serviceplattform (10) umfasst, die dazu konfiguriert ist, von Wartungspersonal betreten zu werden,
**dadurch gekennzeichnet, dass** die Serviceplattform (10) faltbar an den Turm (2) angedockt ist.

10. Windturbine (1) nach dem vorhergehenden Anspruch, wobei das Fundament (9) ein integraler Teil, insbesondere eine Monopile, ist und/oder der Turm (2) ein integraler Teil ist.

11. Windturbine (1) nach einem der Ansprüche 9 und 10, wobei die Windturbine (1) keine separate Einheit, insbesondere kein Übergangsstück, zwischen dem Fundament (9) und dem Turm (2) umfasst.

12. Windturbine (1) nach einem der Ansprüche 9 bis 11, wobei der Turm (2) durch mindestens eines der Folgenden direkt auf das Fundament (9) montiert ist:
eine Flanschverbindung (90), vorzugsweise unter Verwendung von Bolzen, die unterschiedliche Ausrichtungen in Bezug auf eine Turmachse aufweisen;
eine Gleitgelenkverbindung, wobei der Turm (2) ein erstes Rohr aufweist, das an dem Fundament (9) montiert ist, das ein zweites Rohr aufweist, wobei eines von dem ersten und dem zweiten Rohr einen Durchmesser aufweist, der größer als ein Durchmesser des anderen von dem ersten und dem zweiten Rohr ist, wobei das eine von dem ersten und dem zweiten Rohr mit dem größeren Durchmesser über das andere von dem ersten und dem zweiten Rohr gelegt und geführt wird; und
eine Keilverbindung.

13. Windturbine (1) nach einem der Ansprüche 9 bis 12, wobei die Serviceplattform (10) dazu konfiguriert ist, durch Aktivatoren (11) entfaltet zu werden.

## Revendications

1. Procédé de montage en mer d'une éolienne (1), l'éolienne (1) comprenant une fondation (9), une tour (2), une nacelle (3) et une pluralité de pales (6), le procédé comprenant les étapes consistent à :
a) monter la fondation (9) sur ou au-dessus d'un sol marin (S) ;
b) monter la tour (2) directement sur la fondation (9), dans lequel la tour (2) comprend un dispositif d'amarrage pour amarrer une plateforme de service (10) qui est configurée pour être accessible par le personnel d'entretien, dans lequel la plateforme de service (10) est amarrée de manière pliable à la tour (2) ;
c) monter la nacelle (3) sur la tour (2) ; et
d) monter la pluralité de pales (6) sur la nacelle (3).

2. Procédé selon la revendication précédente, dans lequel la fondation (9) est montée comme partie intégrante, en particulier comme monopile.

3. Procédé selon l'une quelconque des revendications précédentes, dans lequel
la tour (2) est montée comme partie intégrante.

4. Procédé selon l'une quelconque des revendications précédentes, dans lequel
l'éolienne (1) ne comprend aucune unité séparée, en particulier aucune pièce de transition, entre la fondation (9) et la tour (2).

5. Procédé selon l'une quelconque des revendications précédentes, dans lequel
la tour (2) est directement montée sur la fondation (9) par au moins l'un parmi :
une liaison de bride (90), de préférence au moyen de boulons ayant des orientations différentes par rapport à un axe de tour ;
une connexion à joint coulissant, dans lequel la tour (2) a un premier tube qui est monté sur la fondation (9) ayant un second tube, dans lequel l'un des premier et second tubes a un diamètre qui est plus grand qu'un diamètre de l'autre des premier et second tubes, dans lequel l'un des premier et second tubes ayant le diamètre plus grand est placé et guidé par l'autre des premier et second tubes ; et
une connexion cunéiforme.

6. Procédé selon l'une quelconque des revendications précédentes, dans lequel
la plateforme de service (10) est déjà amarrée, de préférence à terre, au dispositif d'amarrage lorsque la tour (2) est directement montée sur la fondation (9).

7. Procédé selon l'une quelconque des revendications précédentes, dans lequel
la plateforme de service (10) est amarrée en permanence à la tour (2).

8. Procédé selon l'une quelconque des revendications précédentes, dans lequel
la plateforme de service (10) est dépliée par des activateurs (11) qui sont actionnés à distance.

9. Éolienne offshore (1) comprenant une fondation (9), une tour (2), une nacelle (3) et une pluralité de pales (6), dans laquelle la tour (2) est montée directement sur la fondation (9) et
comprend un dispositif d'amarrage pour amarrer une plateforme de service (10) qui est configurée pour être accessible par le personnel de maintenance,
**caractérisée en ce que** la plateforme
de service (10) est pliable et amarrée à la tour (2).

10. Éolienne (1) selon la revendication précédente, dans laquelle
la fondation (9) est une partie intégrante, en particulier une monopile, et/ou la tour (2) est une partie intégrante.

11. Éolienne (1) selon l'une quelconque des revendications 9 et 10, dans laquelle
l'éolienne (1) ne comprend aucune unité séparée, en particulier aucune pièce de transition, entre la fondation (9) et la tour (2).

12. Éolienne (1) selon l'une quelconque des revendications 9 et 11, dans laquelle
la tour (2) est directement montée sur la fondation (9) par au moins l'un parmi :
une liaison de bride (90), de préférence au moyen de boulons ayant des orientations différentes par rapport à un axe de tour ;
une connexion à joint coulissant, dans lequel la tour (2) a un premier tube qui est monté sur la fondation (9) ayant un second tube, dans lequel l'un des premier et second tubes a un diamètre qui est plus grand qu'un diamètre de l'autre des premier et second tubes, dans lequel l'un des premier et second tubes ayant le diamètre plus grand est placé et guidé par l'autre des premier et second tubes ; et
une connexion cunéiforme.

13. Éolienne (1) selon l'une quelconque des revendications 9 et 12, dans laquelle
la plateforme de service (10) est configurée pour être dépliée par des activateurs (11).
